# EUROPÄISCHE PATENTSCHRIFT

(11) **EP 1 371 827 B1**
(45) Veröffentlichungstag und Bekanntmachung des Hinweises auf die Patenterteilung: **26.07.2006**
(21) Anmeldenummer: 03013155.1
(22) Anmeldetag: 11.06.2003
(51) Int. Cl.: F01N 3/035, B01D 53/94, F01N 3/022, F01N 3/28

(54) **Abgasanlage mit Partikelfilter für Dieselmotoren**
Exhaust system with particle filter for a diesel engine
Système d'échappement avec filtre à particules pour moteur diesel

(30) Priorität: 12.06.2002 DE 10226108
(43) Veröffentlichungstag der Anmeldung: 17.12.2003
(73) Patentinhaber: J. Eberspächer GmbH & Co. KG, 73730 Esslingen (DE)
(72) Erfinder: Gaiser, Gerd, Dr., 72768 Reutlingen (DE); Zacke, Peter, Dr., 73095 Albertshausen (DE)
(74) Vertreter: Klunker . Schmitt-Nilson . Hirsch

(56) Entgegenhaltungen:
- EP-A- 0 277 012
- EP-A- 0 747 579
- EP-A- 0 766 993
- WO-A-00/01463
- DE-A- 19 704 147
- US-A- 5 075 274
- US-A- 5 332 554

## Beschreibung

Die Erfindung bezieht sich auf eine Abgasanlage für Dieselmotoren, aufweisend einen thermisch regenerierbaren Partikelfilter mit Zuströmkanälen, Abströmkanälen und filternden Wänden zwischen den Zuströmkanälen und den Abströmkanälen, wobei eine katalytische Beschichtung der filternden Wände vorgesehen ist zur Herabsetzung der für die thermische Regeneration des Partikelfilters erforderlichen Mindesttemperatur.

Eine Abgasanlage dieser Art ist aus EP 0 766 993 A2 und WO 00/01463 bekannt.

Es ist eine generelle Erscheinung, dass bei niedrigen Lastzuständen des mit der Abgasanlage ausgerüsteten Dieselmotors (typischerweise niedrige Drehzahl und/oder niedriges abgefordertes Drehmoment) die Abgastemperatur in dem Partikelfilter so niedrig sein kann, dass die Oxidationstemperatur der im Partikelfilter abgeschiedenen Partikel nicht erreicht wird. Dies kann auch für Partikelfilter gelten, die zum Zweck einer möglichst niedrigen, unteren Schwellentemperatur für die thermische Regeneration katalytisch beschichtet sind. Wenn Betriebsphasen mit nicht stattfindender Regeneration länger andauern, akkumulieren sich Partikel in erheblicher Menge in dem Partikelfilter, was außer dem dadurch erhöhten Durchströmungs-Druckverlust zu Schwierigkeiten bei einer anschließenden thermischen Regeneration, ausgelöst durch eine Betriebsphase mit ausreichend hoher Abgastemperatur führt:

Wenn ein stark mit abgeschiedenen Partikeln beladener, herkömmlicher Partikelfilter nun mit Abgas derart hoher Temperatur beaufschlagt wird, dass die untere Schwellentemperatur der Regeneration überschritten wird, zündet die Schicht abgeschiedener Partikel an einer oder mehreren Stellen des Partikelfilters. Weil die Partikelschicht überall im Partikelfilter ziemlich groß ist, also pro Flächeneinheit Filterfläche eine vergleichsweise große Masse an abgeschiedenen Partikeln vorhanden ist, ergibt sich eine vergleichsweise hohe Reaktionsgeschwindigkeit der Oxidation der Partikel. Dies setzt eine vergleichsweise große Wärmemenge lokal frei. Es kommt zu einer Selbstbeschleunigung der Verbrennungsreaktion. Lokal können sehr hohe Temperaturspitzen erreicht werden, was die Gefahr der Zerstörung des Partikelfilters nach sich zieht.

Die Erfinder des vorliegenden Anmeldungsgegenstands haben herausgefunden, dass derartige unkontrollierte Regenerationen meist in dem stromaufseitigen Endbereich des Partikelfilters beginnen. Dies ist darin begründet, dass die abgeschiedene Partikelschicht von dem teils hindurch strömenden und dem teils entlang strömenden Abgasstrom erwärmt wird. Somit ist derjenige Teil des Abgasstroms, der den stromabseitigen Endbereich des Partikelfilters erreicht, schon ein Stück abgekühlt. Außerdem ist der Teil-Massenstrom, der den stromabseitigen Endbereich des Partikeifilters zuströmend erreicht, naturgemäß deutlich kleiner als der Gesamt-Massenstrom an der Frontseite des Partikelfilters, weil über die Länge des Partikelfilters ein immer weiter zunehmender Anteil des anfänglichen Massenstroms durch die Filterfläche des Partikelfilters hindurch zu dessen Abströmseite strömt. Durch die Reaktionswärme, die an der gerade regenerierten Stelle entsteht, wird in erster Linie der stromabwärts unmittelbar benachbarte Bereich zusätzlich aufgeheizt. Die Regeneration wandert gleichsam von dem stromaufseitigen Endbereich des Partikelfilters stromabwärts. Wegen des soeben angesprochenen, zusätzlichen Aufheizeffekts wird die bei der Regeneration erreichte Temperaturspitze bei der Wanderung der Regeneration in Richtung stromabwärts immer höher, ebenso der Temperaturgradient von unmittelbar stromaufwärts von der aktuellen Regenerationsstelle hin zu der Temperaturspitze. All dies zusammen hat zur Folge, dass der stark beladene, herkömmliche Partikelfilter, bei dem bei nun genügend hoher Abgastemperatur die Regeneration im stromaufseitigen Endbereich beginnt, in der Gefahr ist, durch Temperaturspitzen beschädigt zu werden.

Der Erfindung liegt die Aufgabe zugrunde, eine Abgasanlage mit thermisch regenerierbarem Partikelfilter verfügbar zu machen, der sich ungefährdeter regeneriert, wenn aus erheblich beladenem Zustand die Regeneration einsetzt

Zur Lösung dieser Aufgabe ist die Abgasanlage der eingangs genannten Art dadurch gekennzeichnet, dass der Partikelfilter eine katalytische Beschichtung aufweist und derart ausgelegt ist, dass die katalytische Beschichtung mit in Längsrichtung der Beschichtung von vorn nach hinten entlang der jeweiligen filternden Wand gesteigerter katalytischer Aktivität ausgebildet ist derart, dass bei beladenem Partikelfilter die Regeneration in seinem stromabseitigen Endbereich beginnt.

Bei der weiter vorn erwähnten, bekannten Abgasanlage mit Partikelfilter gemäß EP 0 766 993 A2 nimmt die Dicke der katalytischen Beschichtung zu, wenn man von der der Zuströmkanalachse näheren Eintrittsseite der filterndnen Wand quer zur Strömungskanalachse fortschreitet in Richtung zu der Austrittsseite der filternden Wand. Diese Richtung der Dickenzunahme der katalytischen Beschichtung ist im wesentlichen rechtwinklig zur erfindungsgemäßen Richtung der Zunahme der katalytischen Aktivität der Beschichtung.

In EP 0 277 012 A1 ist eine Abgasanlage mit einem Partikelfilter beschrieben, bei dem die Kanäle auf einer Teillänge mit einer porösen keramischen Schicht belegt sind. Die poröse keramische Schicht kann zugleich Katalysatorträger eines Katalysators sein, welcher die erforderliche Mindesttemperatur für die thermische Regeneration des Partikelfilters herabsetzt.

In DE 197 49 607 C1 ist eine Abgasanlage mit einem SCR-Katalysatorkörper beschrieben. Wenn man längs der Längsachse des SCR-Katalysatorkörpers fortschreitet, nimmt die Konzentration des als Katalysator eingesetzten Vanadiumpentoxids von vorn nach hinten zu. Der Vanadiumpentoxid-Katalysator katalysiert die Oxidation von SO₂ zu SO₃, und dadurch erfolgt eine Agglomeration der kleinen und kleinsten Partikel zu größeren Teilchen.

Bei dem erfindungsgemäßen Partikelfilter wandert die Reaktionszone der Regeneration "von hinten nach vorne", d.h. von dem stromabseitigen Endbereich des Partikelfilters in Richtung zu dem stromaufseitigen Endbereich des Partikelfilters. Die in der Reaktionszone zusätzlich gebildete Reaktionswärme wirkt sich lediglich mit einem geringen Anteil (Wärmeleitung) in dem unmittelbar stromaufwärts von der Reaktionszone befindlichen Bereich des Partikelfilters aus. Die weiter oben geschilderte, laufende Erhöhung der Temperaturspitze beim Wandern der Reaktionszone in Richtung stromab findet beim Wandern der Reaktionszone in Richtung stromauf praktisch nicht statt. Die Reaktionsspitzen bleiben insgesamt in einem deutlich niedrigeren Temperaturbereich. Der Partikelfilter wird erheblich schonender regeneriert.

Die angesprochene katalytische Beschichtung des Partikelfilters enthält einen oder mehrere katalytisch aktive Substanzen, welche die Oxidation der abgeschiedenen Partikel katalysieren, bevorzugte Beispiele sind Platin und Palladium. Die in Partikelfiltern von Abgasanlagen für Dieselmotoren abgeschiedenen Partikel bestehen im Wesentlichen aus Kohlenstoffpartikeln (Ruß), an denen andere Reaktionsprodukte der Verbrennung im Dieselmotor in feiner flüssiger Form angelagert sein können. Die Erfindung leistet eine erhebliche Temperaturschonung des Partikelfilters in demjenigen besonders kritischen Zustand leistet, in dem die Schichtdicke der abgeschiedenen Partikel vor der Regeneration groß ist (typisches Beispiel: In der oberen Hälfte des beim Betrieb des Partikelfilters vorkommenden Bereichs von Schichtdicken an abgeschiedenen Partikeln). Auch bei Beladungszuständen im mittleren und geringerem Schichtdickenbereich wird in der Regel die Regeneration in dem stromabseitigen Endbereich beginnen; dies muss jedoch erfindungsgemäß nicht zwingend erreicht werden, weil ausgehend von diesem Beladungszustand die erreichten Temperaturspitzen sowieso weniger hoch sind.

Vorstehend ist vielfach von "Endbereich des Partikelfilters", "Schichtdicke im Partikelfilter", "Reaktionszone des Partikelfilters" und Ähnlichem gesprochen worden. Bei der heute häufigsten Bauart von Partikelfiltern weist der Partikelfilter eine sehr große Anzahl von parallel verlaufenden Kanälen auf, wobei Kanäle, die an der Zuströmstirnseite des Partikelfilters offen sind und am anderen Ende geschlossen sind, mit Kanälen abwechseln, die an der Abströmstirnseite des Partikelfilters offen und an dem anderen Ende geschlossen sind. Somit muss jeder Teil-Abgasstrom, der durch einen Zuströmkanal in dem Partikelfilter strömt, durch die porösen Wände dieses Zuströmkanals in benachbarte Abströmkanäle überströmen. Die bisher gemachten Aussagen sind streng betrachtet bezogen auf jeden einzelnen Zuströmkanal zu verstehen. Sie gelten jedoch auch in entsprechender Mittelung für die Gesamtheit der Zuströmkanäle und damit für den gesamten Partikelfilter.

Der Partikelfilter kann so ausgelegt sein, dass in dem stromabseitigen Endbereich des Partikelfilters die katalytische Aktivität der katalytischen Beschichtung größer ist als in dem stromaufseitigen Endbereich des Partikelfilters. Wenn die sonstigen Parameter in dem Partikelfilter im Wesentlichen gleich sind, führt die dortige größere katalytische Aktivität dazu, dass die Regeneration in dem stromabseitigen Endbereich beginnt.

Die Ausdrucksweise "die katalytische Aktivität ist in dem stromabseitigen Endbereich größer als in dem stromaufseitigen Endbereich" schließt auch den Extremfall ein, dass in dem stromaufseitigen Endbereich überhaupt keine katalytische Aktivität bzw. überhaupt keine katalytische Beschichtung vorgesehen ist. In den meisten Fällen ist es jedoch von Vorteil, dass der Partikelfilter mindestens im Wesentlichen auf seiner gesamten Länge katalytische Aktivität besitzt, allein schon um der Regeneration, die bei einer bestimmten Temperatur in dem stromabseitigen Endbereich des Partikelfilters eingesetzt hat, die Möglichkeit der Wanderung in Richtung zu dem stromaufseitigen Endbereich bei dieser Temperatur zu ermöglichen.

Die Zunahme der katalytischen Aktivität, wenn man sich von dem stromaufseitigen Endbereich des Partikelfilters in Richtung zu dem stromabseitigen Endbereich des Partikelfilters bewegt, kann kontinuierlich oder stufenweise erfolgen. Letzteres ist herstellungstechnisch in vielen Fällen günstiger.

Die gewünschte katalytische Aktivität kann insbesondere durch die Konzentration der katalytisch aktiven Substanz eingestellt werden. Eine größere Konzentration ergibt in aller Regel eine größere katalytische Aktivität. Zusätzlich oder alternativ kann die katalytische Aktivität durch die Dispersion der katalytisch aktiven Substanz eingestellt werden. In der Regel gilt der Zusammenhang, dass eine feinere Dispersion zu einer größeren katalytischen Aktivität führt. Zu fein sollte man allerdings die Dispersion nicht wählen, weil derartige katalytische Beschichtungen zur stärkeren Alterung bei hohen Temperaturen neigen.

Wenn die katalytisch aktive Substanz ein Gemisch aus mindestens zwei katalytisch aktiven Substanzen ist, besteht eine erfindungsgemäß bevorzugte Ausführung darin, die Konzentrationen der Einzelsubstanzen (Mischungsverhältnis) in dem stromabseitigen Endbereich anders als in dem stromaufseitigen Endbereich und zwar so zu wählen, daß der Regenerationsbeginn im stromabseitigen Endbereich erreicht wird.

Eine andere bevorzugte Ausgestaltung besteht darin, dass filternde Wände des Partikelfilters in seinem stromabseitigen Endbereich mit geringerem Durchströmungs-Druckverlust ausgelegt sind als in seinem stromaufseitigen End bereich. Dies kann man vorzugsweise durch größere Porosität der filternden Wände im stromabseitigen Endbereich des Partikelfilters erreichen. Der geringere Durchströmungs-Druckverlust der filternden Wände (im unbeladenen Zustand des Partikelfilters) führt dazu, dass sich dort beim Betrieb der Abgasanlage Partikel in größerer Schichtdicke ansammeln als in denjenigen Bereichen des Partikelfilters, wo der Durchströmungs-Druckverlust (im unbeladenen Zustand des Partikelfilters) größer ist. In dem stromabseitigen Endbereich des Partikelfilters, wo die Schichtdicke der abgeschiedenen Partikel größer ist, läuft eine einsetzende Regeneration durch Oxidation der Partikel rascher ab als in anderen Bereichen des Partikelfilters, weil mehr Reaktionswärme zur Erhitzung des Nachbarbereichs der in der Regeneration befindlichen Stelle der Partikelschicht zur Verfügung steht. Die an einer Stelle in Gang gekommene Regeneration vermindert lokal rasch die Schichtdicke der Partikel. Dort wird dann die filternde Wand vergleichsweise geringen Durchströmungs-Druckverlustes freigelegt. Infolgedessen strömt dort sauerstoffhaltiges Abgas in größerer Menge zu, was die dortige Regeneration zusätzlich fördert.

Eine andere bevorzugte Ausgestaltung besteht darin, dass die Zuströmkanäle des Partikelfilters, die umfangsseitig von filternden Wänden umgeben sind, in ihrem stromabseitigen Endbereich mit kleinerem Strömungsquerschnitt ausgebildet sind als in ihrem stromaufseitigen Endbereich. Dies hat zur Folge, dass die Strömungsgeschwindigkeit des zuströmenden, Partikel aufweisenden Abgases im stromabseitigen Endbereich größer ist als ohne die genannte Maßnahme, bei geeigneter Auslegung sogar größer ist als in dem stromaufseitigen Endbereich des Partikelfilters. Höhere Strömungsgeschwindigkeit bedeutet größere Wärmeübertragung auf die dortigen Partikelschichten auf den filternden Wänden. Größere Wärmeübertragung fördert den dortigen Beginn der Regeneration.

Es wird darauf hingewiesen, dass die im vorangehenden Absatz beschriebene Auslegung und die im vorangehenden Absatz beschriebenen Effekte sich auch einstellen, wenn - wie weiter vorn beschrieben - die filternden Wände des Partikelfilters in dem stromabseitigen Endbereich mit geringerem Durchströmungs-Druckverlust ausgelegt sind als in dem stromaufseitigen Endbereich. Wenn, wie beschrieben, in dem stromabseitigen Endbereich die Schichtdicke der abgeschiedenen Partikel größer wird als in dem stromaufseitigen Endbereich, stellt sich die vorteilhafte Strömungsquerschnitt-Abnahme beim Fortschreiten vom stromaufseitigen Endbereich zum stromabseitigen Endbereich selbsttätig ein. Am günstigsten ist eine Kombination beider Auslegungsmaßnahmen.

Insgesamt ist es bei dem erfindungsgemäß ausgelegten Partikelfilter günstig, wenn dem stromabseitigen Endbereich des Partikelfilters ein größerer Abgasmassenstrom zugeführt wird als dem stromaufseitigen Endbereich des Partikelfilters, weil dies wegen höheren Sauerstoffangebots die Regeneration im stromabseitigen Endbereich fördert. Eine Möglichkeit hierfür ist die Ausführung der Zuströmkanäle des Partikelfilters derart, dass ein erster Teilstrom-Zuströmkanal eine hintere Endöffnung ein Stück vor dem hinteren Ende des (z.B. umgebenden oder seitlich parallel verlaufenden) zweiten Teilstrom-Zuströmkanals hat. Der Teil-Abgasstrom durch den ersten Teilstrom-Strömungskanal erreicht somit den stromabseitigen Endbereich, ohne dass er zuvor mit filternden Wänden des zweiten Teilstrom-Zuströmungskanals in Berührung gekommen wäre (zumindest nicht auf gesamtem Umfang).

Bisher ist davon gesprochen worden, dass in dem stromabseitigen Endbereich des Partikelfilters eine andere Auslegung als in dem stromaufseitigen Endbereich des Partikelfilters verwirklicht ist. Insgesamt soll allerdings in der Regel vermieden werden, dass in dem mittleren Bereich des Partikelfilters eine weniger regenerationsfördernde Auslegung vorhanden ist als im stromaufseitigen Endbereich. Insofern ist es bevorzugt, wenn in dem stromabseitigen Endbereich des Partikelfilters eine stärker regenerationsfördernde Ausbildung verwirklicht ist als in dem gesamten anderen, stärker stromaufwärts befindlichen Bereich des Partikelfilters. Dies gilt für alle vorstehend beschriebenen Ausbildungsmöglichkeiten.

Die erfindungsgemäße Abgasanlage für Dieselmotoren ist besonders bevorzugt für Kraftfahrzeuge vorgesehen. Sie ist weiter bevorzugt für Schiffsdieselmotoren vorgesehen. Sie kann aber auch für stationäre Dieselmotoren eingesetzt werden, z.B. Dieselmotoren für Stromaggregate, Dieselmotoren für Pumpen und Kompressoren, und andere stationäre Dieselmotoren mehr.

Die Erfindung und bevorzugte Ausführungen der Erfindung werden nachfolgend anhand schematisiert zeichnerisch dargestellter Ausführungsbeispiele noch näher erläutert. Es zeigt:
Fig. 1 eine Abgasanlage für einen Antriebs-Dieselmotor eines Personenkraftwagens in Seitenansicht;
Fig. 2 eine Partikelfilter-Einheit im Längsschnitt und in größerem Maßstab als in Fig. 1;
Fig. 3 einen Ausschnitt eines Partikelfilters im Längsschnitt und in größerem Maßstab als bei Fig. 2;
Fig. 4 einen Ausschnitt eines Partikelfilters im Längsschnitt und in größerem Maßstab als bei Fig. 2.

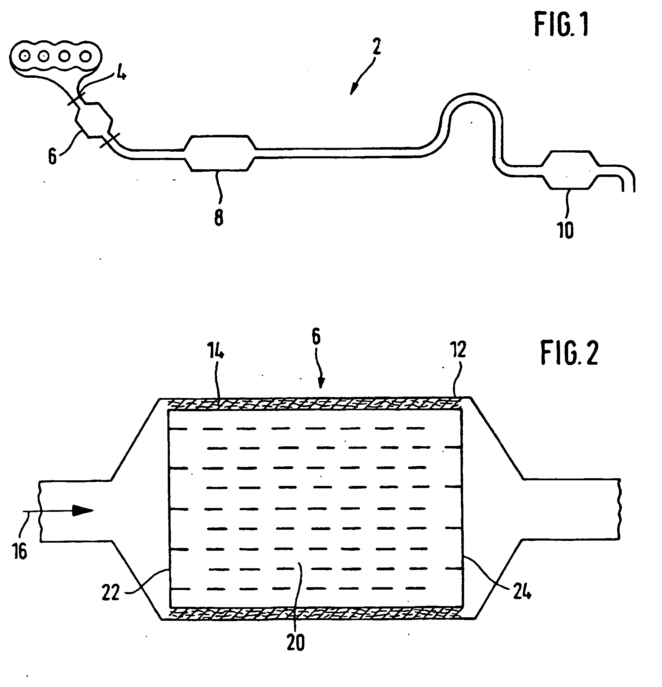

Fig. 1 zeigt eine Abgasanlage 2 in Seitenansicht, gleichsam als wenn man sie nach unten aus einem Kraftfahrzeug ausgebaut hätte. Die gezeigte Abgasanlage 2 besteht aus folgenden Hauptbestandteilen: In Strömungsrichtung ganz vorne einem sog. Krümmer, welcher seitlich an den Dieselmotor angeschraubt wird und die Abgaskanäle aus den einzelnen Zylindern des Dieselmotors zu einem gemeinsamen Kanal zusammenführt; anschließend einer Partikelfilter-Einheit 6; nach einem Rohrstrangabschnitt anschließend einem Schalldämpfer 8; anschließend einem weiteren Rohrstrangabschnitt; und schließlich einem Endschalldämpfer 10. Die Partikelfilter-Einheit 6 kann insbesondere gleich anschließend an den Krümmer 4, gleichsam in einem schräg nach unten verlaufenden Abschnitt der Abgasanlage 2, positioniert sein, wobei diese dem Dieselmotor nahe Positionierung die Bedingungen für eine thermische Regeneration des Partikelfilters 6 verbessert. Aber auch eine Anordnung weiter hinten in der Abgasanlage 2 ist möglich. Der Krümmer 4 kann ein luftspaltisolierter Krümmer sein, der weitgehend doppelwandig ausgeführt ist und deshalb die Wärmeabgabe von dem hindurch strömenden Abgas durch den Krümmer 4 an die Umgebung verringert.

In Fig. 2 ist die Partikelfilter-Einheit 6 von Fig. 1 im Längsschnitt und in größerem Maßstab gezeichnet. Die Partikelfilter-Einheit 6 kann in ihrem Hauptbereich insbesondere eine im Wesentlichen zylindrische Konfiguration aufweisen. Insbesondere zur Anpassung an den zur Verfügung stehenden Einbauraum können aber auch andere Querschnitts-Konfigurationen gewählt werden, insbesondere mehr elliptisch.

Bei der gezeichneten Ausführungsform besteht die Partikelfilter-Einheit 6 im Wesentlichen aus einem Gehäuse 12 aus Blech, einem Partikelfilter 20 und einer den Partikelfilter 20 an seinem Umfang umgebenden Lagerungsmatte 14, die einer nachgiebigen Lagerung des Partikelfilters 20 in dem Gehäuse 12 dient. Das Gehäuse 12 hat insbesondere eine im Querschnitt kreisrunde Konfiguration. Strömungsaufwärts von dem Mittelbereich des Gehäuses 12 befindet sich ein trichterförmiger Übergangsbereich, und strömungsabwärts von dem Mittelbereich befindet sich ebenfalls ein trichterförmiger Übergangsbereich; beide Übergangsbereiche stellen den Übergang zu dem Rohrstrang der Abgasanlage 2 dar. Die Durchströmungsrichtung der Partikelfilter-Einheit 6 mit Abgas ist durch einen Pfeil 16 veranschaulicht.

Der Partikelfilter 20 besteht vorzugsweise aus gesintertem, keramischen Material und weist, wie weiter unten noch genauer beschrieben wird, eine große Anzahl von parallelen Längskanälen auf, die abwechselnd an der Eintritts-Stirnfläche 22 des Partikelfilters 20 und an der Austritts-Stirnfläche 24 des Partikelfilters 20 geschlossen sind. Eine typische Zahl, welche die Querschnittsfläche eines Längskanals veranschaulicht, ist zehn Längskanäle pro cm² Querschnittsfläche des Partikelfilters 20. Das Keramikmaterial ist porös, so dass Abgas, welches an der Eintritts-Stirnfläche 22 in die dort offenen Längskanäle (= Zuströmkanäle) einströmt, durch die porösen, filternden Wände der Zuströmkanäle in benachbarte Abströmkanäle, die an der abströmseitigen Stirnfläche 24 des Partikelfilters 20 offen sind, überströmt und dabei gefiltert wird. Derartige Partikelfilter 20 sind bekannt. Es wird ausdrücklich betont, dass es auch andere Bauarten von Partikelfiltern gibt und dass die erfindungsgemäße Abgasanlage 2 alternativ auch mit anderen Bauarten von Partikelfiltern ausgeführt werden kann.

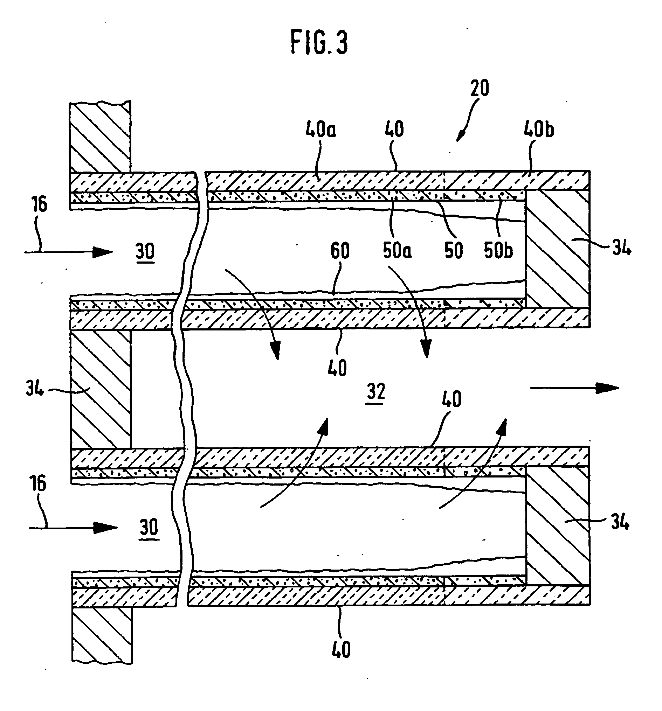

Aus Fig. 3 kann man den Aufbau des Partikelfilters 20 mehr im Detail ersehen. Man erkennt zwei Zuströmkanäle 30 und dazwischen einen Abströmkanal 32. Jeder Zuströmkanal 30 und jeder Abströmkanal 32 hat einen quadratischen Strömungsquerschnitt. Jeder Zuströmkanal 30 ist von vier Abströmkanälen 32 umgeben, und jeder Abströmkanal 32 ist von vier Zuströmkanälen 30 umgeben (in beiden Fällen selbstverständlich ausgenommen die Kanäle am äußersten Umfang des Partikelfilters 20). Somit ist jeder Zuströmkanal 30 umgeben von vier filternden Wänden 40. In Fig. 3 erkennt man auch die weiter vorn schon erwähnten, keramischen, undurchlässigen Stopfen 34 zum Verschließen der Zuströmkanäle 30 am hinteren Ende und zum Verschließen der Abströmkanäle 32 am vorderen Ende des Partikelfilters 20.

Die filternden Wände 40 haben jeweils einen strömungsmäßig vorderen Bereich 40a und einen strömungsmäßig hinteren Bereich 40b. In dem vorderen Bereich 40a ist, wenn man den Partikelfilter 20 ohne in ihm abgeschiedene Partikel betrachtet, der Durchströmungs-Druckverlust deutlich höher als im hinteren Bereich 40b. Dies kann man besonders einfach und deshalb bevorzugt dadurch erreichen, dass für den vorderen Bereich 40a ein Keramikpulver mit kleinerer mittlerer Korngröße als für den hinteren Bereich 40b als Ausgangsmaterial verwendet worden ist. Dadurch ergibt sich im vorderen Bereich 40a im fertigen Partikelfilter 20 eine kleinere Porosität als im hinteren Bereich 40b. Trotz dieser unterschiedlichen Ausgangsmaterialien ist der Partikelfilter 20 ein integrales Produkt.

Im gezeichneten Ausführungsbeispiel nimmt der hintere Bereich 40b insbesondere etwa 5 bis 20% der gesamten aktiven Länge des betreffenden Zuströmkanals 30 bzw. Abströmkanals 32 (d.h. abgezogen die Stopfen 34) ein, so dass man von dem stromabseitigen Endbereich der Kanäle 30 bzw. 32 oder des Partikelfilters 20 sprechen kann. Insbesondere wenn damit zu rechnen ist, dass sich in den Zuströmkanälen 30 im Lauf der Zeit gewisse Mengen von unbrennbarem Abrieb ansammeln, kann man die Länge de hinteren Bereichs 40b auch etwas größer wählen, vorzugsweise 10 bis 35%. Die Porosität des hinteren Bereichs 40b ist so groß gewählt, dass höchstens ein sehr geringer Anteil der im Abgas enthaltenen Partikel dort hindurch strömen kann (wobei nach einsetzender Partikelabscheidung die Abscheidungsgüte wegen des Filtereffekts der Partikelschicht steigt). Die Porosität in dem vorderen Bereich 40a ist so viel kleiner, dass der weiter unten zu beschreibende, beabsichtigte Effekt erreicht wird, aber im vorderen Bereich 40a kein Durchströmungs-Druckverlust stattfindet, der schon ohne abgeschiedene Partikel oder bei geringer Schichtdicke abgeschiedener Partikel unzuträglich hoch wäre.

Auf den vier filternden Wänden 40 jedes Zuströmkanals 30 ist innenseitig eine katalytische Beschichtung 50 aufgebracht, insbesondere als Washcoat (Aufschlämmung von feinen, katalytisch wirksamen Edelmetallpartikeln und inerten Trägerpartikeln; nach dem Trocknen des Washcoats ergibt sich eine poröse Beschichtung mit sehr großer innerer Oberfläche).

In Fig. 3 ist veranschaulicht, dass die katalytische Beschichtung 50 einen strömungsmäßig vorderen Bereich 50a und einen strömungsmäßig hinteren Bereich 50b aufweist. Bei dem gezeichneten Ausführungsbeispiel nimmt der hintere Bereich 50b vorzugsweise 5 bis 20% bzw. 10 bis 35% der gesamten aktiven Länge des betreffenden Zuströmkanals 30 ein, so dass der Übergang zwischen dem vorderen Bereich 50a und dem hinteren Bereich 50b mit dem Übergang zwischen dem vorderen Bereich 40a und dem hinteren Bereich 40b bei der Porosität der betreffenden filternden Wand 40 zusammenfällt. Es wird allerdings betont, dass dieses Zusammenfallen nicht zwingend erforderlich ist. Den hinteren Bereich 50b kann man auch stromabseitigen Endbereich des betreffenden Zuströmkanals 30 bzw. des Partikelfilters 20 nennen.

Der hintere Bereich 50b unterscheidet sich von dem vorderen Bereich 50a durch eine größere katalytische Aktivität, vorzugsweise erreicht durch eine größere Konzentration an katalytisch wirksamer Substanz, insbesondere Edelmetall und/oder durch eine feinere Dispersion katalytisch wirksamer Substanz, insbesondere Edelmetalls. Als katalytisch wirksames Edelmetall für die Beschichtung 50 kommt vorzugsweise Platin oder ein anderes Metall aus der Platingruppe, und zwar in beiden Fällen entweder ein einzelnes Metall oder ein Gemisch aus mindestens zwei unterschiedlichen Metallen, in Betracht.

Schließlich ist in Fig. 3 eingezeichnet, wie der Partikelfilter 20 nach einer Betriebsphase des Dieselmotors mit niedriger Lastzuständen aussieht, d.h. mit einer Schicht abgeschiedener und akkumulierter Partikel innen auf den vier filternden Wänden 40. Die Schicht abgeschiedener Partikel ist mit 60 bezeichnet. Die Schicht 60 hat im hinteren Bereich 40b der betreffenden filternden Wand 40 eine größere Schichtdicke als im vorderen Bereich 40a, weil sich im Abscheidebetrieb des Partikelfilters 20 lokal im Wesentlichen eine derartige Schichtdikke einstellt, dass der Durchströmungs-Druckverlust aus der Summe der filternden Wand 40, des Washcoats 50 und der Partikelschicht 60 überall im Wesentlichen gleich groß ist. Es wird betont, dass die Dicke des Washcoats 50 und die Dicke der Partikelschicht 60 in Fig. 3 weit übertrieben gezeichnet worden sind.

Die größere katalytische Aktivität in dem hinteren Bereich 50b der katalytischen Beschichtung 50 führt dazu, das dann, wenn - ausgehend von beladenem Zustand des Partikelfilters 20 - das zuströmende Abgas eine Temperatur oberhalb der für Regeneration des Partikelfilters 20 erforderlichen Mindesttemperatur hat, die Regeneration durch Oxidation der abgeschiedenen Partikel im hinteren Endbereich des betreffenden Zuströmkanals 30 bzw. des gesamten Partikelfilters 20 beginnt, und zwar irgendwo in demjenigen Endbereich, in dem die katalytische Beschichtung 50b mit größerer katalytischer Aktivität vorgesehen ist. Von dort wird die Reaktionszone, in der die Oxidation der abgeschiedenen Partikel abläuft, strömungsaufwärts nach vorn in der Partikelschicht 60 wandern, begünstigt durch die Reaktionswärme, die durch Oxidation in dem Bereich vergleichsweise großer Schichtdicke der Partikelschicht 60 entsteht und zum Erhitzen der stromauf befindlichen Nachbarschaft in der Schicht 60 beiträgt, und durch die verstärkte Abgasströmung mit erhöhtem Sauerstoffangebot in demjenigen Bereich des Zuströmkanals 30, der strömungsaufwärts von dem Bereich liegt, bei dem durch Regeneration bereits die Dicke der Partikelschicht 60 verringert oder ganz abgebaut worden ist, weil dort der lokale Durchströmungswiderstand geringer geworden ist.

Es wird betont, dass auch eine Ausführungsform, bei der die filternden Wände 40 von vorn bis hinten im Wesentlichen gleichen Durchströmungs-Verlust haben, eine gute erfindungsgemäße Ausführungsform ist. In diesem Fall verliert man lediglich den geschilderten Vorteil der größeren Dicke der Partikelschicht 60 im hinteren Endbereich 50b der katalytischen Beschichtung 50. Aber auch der umgekehrte Fall, nämlich Beschichtung 50 mit von vorn nach hinten durchgehend im Wesentlichen gleicher katalytischer Aktivität, aber Bereiche 40a und 40b mit unterschiedlichem Strömungswiderstand der betreffenden filternden Wand 40, ist eine für die Praxis brauchbar Ausführungsform der Erfindung. In den meisten Fällen ist allerdings der Effekt der Beschichtung 50 mit unterschiedlicher katalytischer Aktivität der größere Effekt.

Die zwei unterschiedlichen Washcoats 50a und 50b können insbesondere dadurch produziert werden, dass man den unbeschichteten Partikelfilter 20 mit einer ersten Stirnseite in eine erste Aufschlämmung bis zu einer bestimmten Tiefe eintaucht und danach mit seiner anderen Stirnseite in eine andere Aufschlämmung bis zu einer bestimmten Tiefe eintaucht.

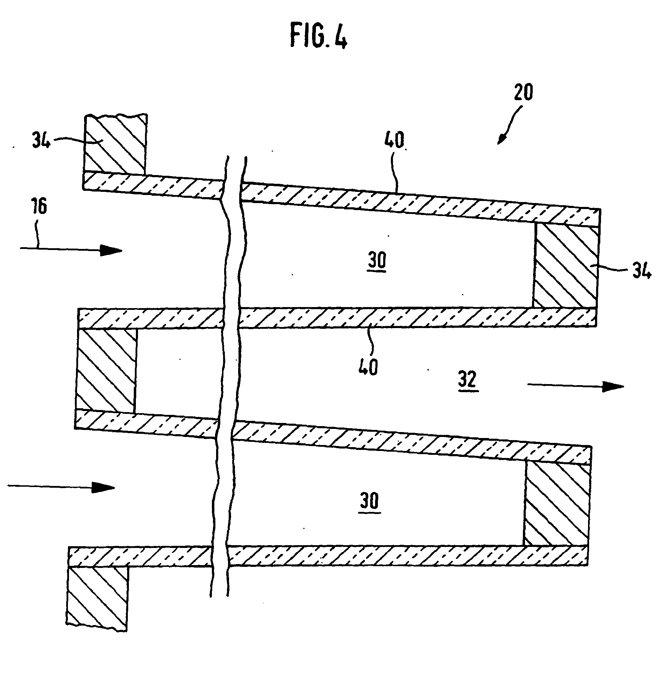

In Fig. 4 ist eine andere erfindungsgemäße Maßnahme veranschaulicht. Die Zuströmkanäle 30 haben eine vorn stromaufseitigen Ende zum stromabseitigen Ende abnehmenden Strömungsquerschnitt, die Abströmkanäle 32 einen vorn stromaufseitigen Ende zum stromabseitigen Ende zunehmenden Strömungsquerschnitt. Die Ausführung kann man so wählen, dass die Strömungsgeschwindigkeit des Abgases im stromabseitigen, hinteren Endbereich des betreffenden Zuströmkanals 30 größer ist als weiter vorn, und dies begünstigt den Wärmeübertragung auf die Schicht 60 abgeschiedener Partikel in diesem Endbereich und die Sauerstoffzufuhr zur Regeneration in diesem Endbereich. Im Unterschied zu Fig. 3 ist in Fig. 4 der Zustand ohne Schicht 60 abgeschiedener Partikel gezeichnet und zur Vereinfachung die katalytische Beschichtung 50 nicht eingezeichnet.

Es wird betont, dass die durch Fig. 4 veranschaulichte Maßnahme ohne die durch Fig. 3 veranschaulichten Maßnahmen technisch sinnvoll verwirklicht werden kann. Die größeren Effekte werden allerdings erreicht, wenn man die Maßnahme gemäß Fig. 4 mit den katalytischen Beschichtungen 50a und 50b mit unterschiedlicher katalytischer Aktivität und/oder mit den Bereichen 40a und 40b unterschiedlichen Strömungswiderstands (Beides wie an Hand von Fig. 3 erläutert) kombiniert.

Auch wenn in Fig. 3 die katalytische Beschichtung 50 als innere Schicht auf der filternden Wand 40 gezeichnet ist, versteht es sich, dass die katalytische Beschichtung 50 auch in die Poren der Wand 40 eingedrungen ist, im Grenzfall sogar praktisch ausschließlich im Inneren der Wand 40 vorliegt.

## Patentansprüche

1. Abgasanlage für Dieselmotoren,
aufweisend einen thermisch regenerierbaren Partikelfilter (20) mit Zuströmkanälen (30), Abströmkanälen (32) und filternden Wänden (40) zwischen den Zuströmkanälen (30) und den Abströmkanälen (32), wobei eine katalytische Beschichtung (50) der filternden Wände (40) vorgesehen ist zur Herabsetzung der für die thermische Regeneration des Partikelfilters (20) erforderlichen Mindesttemperatur,
**dadurch gekennzeichnet,**
**dass** die katalytische Beschichtung (50) mit in Längsrichtung der Beschichtung (50) von vorn nach hinten entlang der jeweiligen filternden Wand (40) gesteigerter katalytischer Aktivität ausgebildet ist derart, dass bei beladenem Partikelfilter (20) die Regeneration in seinem stromabseitigen Endbereich beginnt.

2. Abgasanlage nach Anspruch 1,
**dadurch gekennzeichnet, dass** die Konzentration der katalytisch aktiven Substanz im hinteren Endbereich der Beschichtung (50) größer ist als im vorderen Anfangsbereich der Beschichtung (50).

3. Abgasanlage nach Anspruch 1 oder 2,
**dadurch gekennzeichnet, dass** die Dispersion der katalytisch aktiven Substanz im hinteren Endbereich der Beschichtung (50) feiner ist als im vorderen Anfangsbereich der Beschichtung (50).

4. Abgasanlage nach einem der Ansprüche 1 bis 3,
**dadurch gekennzeichnet, dass** die Beschichtung (50) mindestens zwei katalytisch aktive Substanzen aufweist;
und dass die Substanz mit höherer katalytischer Aktivität im hinteren Endbereich der Beschichtung (50) in höherer Konzentration vorhanden ist als im vorderen Anfangsbereich der Beschichtung (50).

5. Abgasanlage nach einem der Ansprüche 1 bis 4,
**dadurch gekennzeichnet, dass** die katalytische Aktivität der Beschichtung (50) von vorn nach hinten kontinuierlich zunimmt.

6. Abgasanlage nach einem der Ansprüche 1 bis 4,
**dadurch gekennzeichnet, dass** die katalytische Aktivität der Beschichtung (50) von vorn nach hinten stufenweise zunimmt.

7. Abgasanlage nach einem der Ansprüche 1 bis 6,
**dadurch gekennzeichnet, dass** der Partikelfilter (20) im Wesentlichen auf seiner gesamten Länge katalytisch beschichtet ist.

8. Abgasanlage nach einem der Ansprüche 1 bis 7,
**dadurch gekennzeichnet, dass** filternde Wände (40) des Partikelfilters (20) in seinem stromabseitigen Endbereich (40b) mit geringerem Durchströmungs-Druckverlust ausgelegt sind als in seinem stromaufseitigen Endbereich.

9. Abgasanlage nach einem der Ansprüche 1 bis 8,
**dadurch gekennzeichnet, dass** umfangsseitig von filternden Wänden (40) umgebene Zuströmkanäle (30) des Partiketfitters (20) in ihrem stromabseitigen Endbereich mit kleinerem Strömungsquerschnitt ausgebildet sind als in ihrem stromaufseitigen Endbereich.

## Claims

1. An exhaust system for diesel engines,
comprising a particle filter (20) adapted to be regenerated thermally and having inflow channels (30), outflow channels (32) and filtering walls (40) between said inflow channels (30) and said outflow channels (32), with a catalytic coating (50) of the filtering walls (40) being provided for reducing the minimum temperature required for thermal regeneration of the particle filter (20),
**characterized in that**
the catalytic coating (50) is formed to have catalytic activity that is enhanced in the longitudinal direction of the coating (50) from the front in rearward direction along the respective filtering wall (40), such that, when the particle filter (20) is loaded, the regeneration starts in the downstream end portion thereof.

2. An exhaust system according to claim 1,
**characterized in that** the concentration of the catalytically active substance is greater in the rear end portion of the coating (50) than in the forward initial portion of the coating (50).

3. An exhaust system according to claim 1 or 2,
**characterized in that** the dispersion of the catalytically active substance is finer in the rear end portion of the coating (50) than in the forward initial portion of the coating (50).

4. An exhaust system according to any of claims 1 to 3,
**characterized in that** the coating (50) has at least two catalytically active substances;
and **in that** the substance of higher catalytic activity is present in a higher concentration in the rear end portion of the coating (50) than in the forward initial portion of the coating (50).

5. An exhaust system according to any of claims 1 to 4,
**characterized in that** the catalytic activity of the coating (50) increases continuously from the front towards the rear.

6. An exhaust system according to any of claims 1 to 4,
**characterized in that** the catalytic activity of the coating (50) increases in steps from the front towards the rear.

7. An exhaust system according to any of claims 1 to 6,
**characterized in that** the particle filter (20) is catalytically coated substantially over the entire length thereof.

8. An exhaust system according to any of claims 1 to 7,
**characterized in that** filtering walls (40) of the particle filter (20) are designed to provide for lower flow-through pressure loss in the downstream end portion (40b) of the same than in the upstream end portion of the same.

9. An exhaust system according to any of claims 1 to 8,
**characterized in that** the inflow channels (30) of the particle filter (20), which are circumferentially surrounded by filtering walls (40), are designed to have a smaller cross-sectional area of flow in the downstream end portion of the same than in the upstream end portion of the same.

## Revendications

1. Système d'échappement pour moteurs Diesel,
présentant un filtre à particules (20) thermo-régénérable avec canaux d'admission (30), canaux d'évacuation (32) et parois filtrantes (40) entre les canaux d'admission (30) et les canaux d'évacuation (32), un revêtement catalytique (50) des parois filtrantes (40) étant prévu en vue de la diminution de la température minimum nécessaire à la régénération thermique du filtre à particules (20),
**caractérisé en ce que**
le revêtement catalytique (50) est réalisé avec activité catalytique accrue dans le sens longitudinal du revêtement (50) de l'avant vers l'arrière le long de la paroi filtrante (40) respective de telle manière que la régénération commence dans sa zone terminale côté aval en cas de filtre à particules (20) chargé.

2. Système d'échappement selon la revendication 1,
**caractérisé en ce que** la concentration de la substance active catalytique dans la zone terminale arrière du revêtement (50) est supérieure à celle dans la zone initiale antérieure du revêtement (50).

3. Système d'échappement selon la revendication 1 ou 2,
**caractérisé en ce que** la dispersion de la substance active catalytique dans la zone terminale arrière du revêtement (50) est plus fine que celle dans la zone initiale antérieure du revêtement (50).

4. Système d'échappement selon l'une quelconque des revendications 1 à 3,
**caractérisé en ce que** le revêtement (50) présente au moins deux substances actives catalytiques ;
et **en ce que** la substance est disponible avec activité catalytique plus élevée dans la zone terminale arrière du revêtement (50) en concentration plus élevée que dans la zone initiale antérieure du revêtement (50).

5. Système d'échappement selon l'une quelconque des revendications 1 à 4,
**caractérisé en ce que** l'activité catalytique du revêtement (50) s'accroît en continu de l'avant vers l'arrière.

6. Système d'échappement selon l'une quelconque des revendications 1 à 4,
**caractérisé en ce que** l'activité catalytique du revêtement (50) s'accroît graduellement de l'avant vers l'arrière.

7. Système d'échappement selon l'une quelconque des revendications 1 à 6,
**caractérisé en ce que** le filtre à particules (20) est recouvert pour l'essentiel de manière catalytique sur toute sa longueur.

8. Système d'échappement selon l'une quelconque des revendications 1 à 7,
**caractérisé en ce que** des parois filtrantes (40) du filtre à particules (20) sont conçues dans sa zone terminale côté aval (40b) avec perte de pression d'écoulement inférieure à celle dans sa zone terminale côté amont.

9. Système d'échappement selon l'une quelconque des revendications 1 à 8,
**caractérisé en ce que** des canaux d'admission (30) du filtre à particules (20) entourés côté circonférence par des parois filtrantes (40) sont réalisés dans leur zone terminale côté aval avec une section de passage inférieure à celle dans leur zone terminale côté amont.
